# EUROPEAN PATENT SPECIFICATION

(11) **EP 1 819 592 B1**
(45) Date of publication and mention of the grant of the patent: **04.04.2012**
(21) Application number: 05803928.0
(22) Date of filing: 01.08.2005
(51) Int. Cl.: B64D 23/00, A01K 73/02, A63G 31/00

(54) **RECIRCULATING VERTICAL WIND TUNNEL SKYDIVING SIMULATOR AND REDUCED DRAG CABLE FOR USE IN WIND TUNNELS AND OTHER LOCATIONS**
WINDTUNNELFALLSCHIRMSPRUNGSIMULATOR MIT ZIRKULIERENDEM VERTIKALWIND UND SEIL FÜR REDUZIERTE ZUGKRAFT ZUR VERWENDUNG IN WINDTUNNELS UND ANDEREN ORTEN
SIMULATEUR DE PARACHUTISME SPORTIF A SOUFFLERIE VERTICALE DE RECIRCULATION ET CABLE DE HALAGE REDUIT UTILISE DANS LES SOUFFLERIES VERTICALES ET AUTRES EMPLACEMENTS

(30) Priority: 30.07.2004 US 909088; 19.07.2005 US 184940
(43) Date of publication of application: 22.08.2007
(60) Divisional application: 09165707.2
(73) Proprietor: SKYVENTURE, LLC, Orlando, FL 32819 (US)
(72) Inventor: METNI, N. Alan, Austin, TX 78730 (US); KITCHEN, William, J., Windermere, FL 34786 (US); MORT, Kenneth, W., Morgan Hill, CA 95037 (US); EASTLAKE, Charles, N., Port Orange, FL 32127 (US); PALMER, Michael, J., Poquoson, VA 23662 (US)
(74) Representative: Haverkamp, Jens
(86) International application number: PCT/US2005/027750
(87) International publication number: WO 2006/012647

(56) References cited:
- WO-A-97/13407
- WO-A-98/46070
- FR-A- 2 659 620
- FR-A- 2 843 940
- US-A- 3 484 953
- US-A- 5 753 811
- US-A- 6 083 110
- US-A1- 2004 115 593
- US-B1- 6 434 879

## Description

### FIELD OF THE INVENTION

The present invention relates to the field of vertical wind tunnels, more particularly, to temperature controlled return flow vertical wind tunnels used as skydiving simulators and amusement devices.

### BACKGROUND OF THE INVENTION

Wind tunnels are well known in the art. Wind tunnels are available in many types and styles depending upon the needs of the user. These include subsonic wind tunnels with and without return flow, transonic wind tunnels with and without return flow, vertical subsonic wind tunnels with and without return flow, supersonic and hypersonic wind tunnels with and without return flow, and compressible flow wind tunnels.

The majority of the wind tunnels are used for research and testing purposes. These include testing of conventional aircraft, helicopters, parachutes and other aerodynamic devices, wing surfaces, control surfaces, submarines, rockets and other launch vehicles, ground vehicles, buildings and other basic flow investigations.

Horizontal wind tunnels (those in which the air in the full speed section of the tunnel flow generally horizontally) are used for aerodynamic research and testing and are generally owned by major defense oriented corporations, the Federal government, or educational institutions and universities. Some of these have been converted or adapted for vertical operation (in which the air in the full speed section of the tunnel flows generally vertically) but most or all perform poorly in that role.

Design constraints that apply to vertical wind tunnels used for freefall simulation differ from those of horizontal testing tunnels. In a vertical wind tunnel / freefall simulator, it is important that the objects in the full speed section of the wind tunnel (in this case the human beings in flight) be able to move about inside that section to experience or practice human body flight, In a horizontal test tunnel, the objects placed in the tunnel arc usually static objects observed or measured by others. For this reason, this fastest part of a horizontal wind tunnel is called a "test section". In a vertical wind tunnel, this same area is instead referred to as the "flight chamber".

In a vertical wind tunnel, it is important that people flying inside the tunnel be allowed to rotate in and out of the flight chamber without stopping the airflow. In contrast, there is little need to move the static objects in the test section of a horizontal wind tunnel during its operation. Furthermore, since fliers in a vertical wind tunnel are free to move about inside flight chamber, it is necessary to constrain their movement to appropriate parts of the system.

While it is possible to put a safety net on both the upstream and downstream ends of the flight chamber, these produce an enormous amount of drag which creates noise and increases the power required to attain any given speed. In fact, such a pair of nets can consume as much as 30% to 50% of the total power required to operate such a wind tunnel.

It is also helpful to have a woven grid of cables at the bottom or upstream end of the flight chamber for use as a standing platform when the occupants are not flying. This "cable floor" provides a convenient work platform for the safety officers or instructors in the flight chamber.

Therefore, for the above safety and usability reasons, it is desirable to have a cable floor / safety net made from cables with the lowest amount of aerodynamic drag possible for a given strength and diameter. In addition to wind tunnels, there are any number of applications employing cables moving through the air or air flowing over cables in which a simple and inexpensive reduced drag cable could provide substantial benefits.

Low drag cables with flat or airfoil shaped cross sections are know in the art and are used frequently in the aircraft industry, However, these are not useful in a woven cable floor for a vertical wind tunnel because it is difficult to keep such cables oriented properly in relation to the airflow. Furthermore, the downstream end of such a flat or airfoil type cable is pointed. Since it is the down stream end that a person falling onto the cable floor / safety net will land on, this type of cable is not safe for this type of application. The prior art airfoil type of cables cannot be used in some other types of applications where low drag cables would be desirable, for similar reasons of orientation, stability, cost or injury potential.

It is also important to prevent occupants from flying laterally outside of the air column and falling unsupported to the floor below. For this reason, the most advanced vertical wind tunnels arc designed such that the air column extends completely from one wall of the flight chamber to the other. This is not necessary in horizontal wind tunnels.

Vertical wind tunnels used for freefall simulation often have to operate in noise sensitive environments such as amusement parks and shopping malls. Horizontal testing tunnels can be located away from the crowds where they are free to make as much noise as is necessary.

As amusement devices, freefall simulators must compete with other amusements on the basis of price and can often be operated on a near continual basis. These two factors make energy efficiency critical to successful commercial operation of a freefall simulator. Energy efficiency is much less important for horizontal testing tunnels in which one often takes hours or days to set up an experiment and then only runs the tunnel for a few minutes to collect the necessary data.

Height is a major constraint of freefall simulators which stand upright and often must be sited in high-density entertainment venues that have severe height limitations. This is not true of horizontal testing tunnels which sit on their side and can be successfully located far away from any crowds.

Finally no known prior art has focused on designing these systems to optimize visibility to public spectators in a high density entertainment venue.

To make a commercially viable vertical wind tunnel for skydiving simulation, one must (1) move enough air and do so smoothly enough to adequately simulate freefall for one or more persons in the flight chamber; (2) with a device that is short enough and quiet enough to be located where large numbers of potential customers tend to be; and, (3) at power consumption levels low enough to make the price of the experience acceptable to the public.

The inventive challenge of satisfying these competing requirements is met by the present device. High airspeeds are required at the flight chamber to float one or more human beings. However, moving air through ductwork at high speeds creates an enormous amount of sound and heat and requires a huge amount of power. Consequently, most modem wind tunnels expand and slow the air just downstream of the flight chamber to decrease power consumption, noise output and heat generation. Doing so can reduce power consumption by more than 60%, and only by doing so will vertical wind tunnels become commercially viable as entertainment devices or skydiving simulators.

However, if one expands the airflow in any section of a wind tunnel too rapidly, the flow will "separate" and become turbulent rather than laminar. This will make the entire system perform poorly, increasing power consumption and decreasing flow quality to the point that the device will not adequately simulate true freefall. The threshold at which this flow separation occurs in an expanding duct is fairly well defined in the literature; in simple terms, the walls of such an expansion cone cannot diverge away from one another at greater than 9 - 12 degrees. For that reason, increasing the length of horizontal test tunnels or the height of vertical wind tunnels tends to improve efficiency.

Unfortunately, while this is easily done for a horizontal system, doing so in a vertical system dramatically increases the construction and operation cost and reduces the number of places at which one can gain governmental approval to build. Consequently, minimizing height while maximizing the expansion and deceleration of the airflow downstream of the flight chamber is the key to making a vertical wind tunnel commercially successful. Similarly, constraining the occupants to the safe areas of the wind tunnel without increasing drag and power consumption is essential.

The prior art wind tunnels do not offer a design that is quiet and short enough to be built in high density shopping and entertainment venues while remaining efficient enough to allow commercially viable operation.

A freefall simulator is disclosed for example in US 6,083,110 A and US 2004/0115593 A1. Whereas US 6,083,110 A discloses a vertical wind tunnel training device with two recirculating airflow plenums and a fan assembly consisting of one motor driven fan in each duct placed above a primary diffuser above the vertical flight chamber, US 2004/0115593 A1 discloses a freefall simulator with two airflow plenums and a fan assembly in each return duct arranged in a bottom section of each airflow plenum. Each fan assembly comprises a motor and a propeller driven by the motor. In order to have a sufficient airflow within the flight chamber so one or more people may float therein strong engines and propellers with an appropriate diameter are needed. Whereas in US 6,083,110 A the alignment of the fan assemblies working in line with the airflow passing through the flight chamber and thus adding to the construction height of the simulator, with the simulator disclosed in US 2004/0115593 A1 the diameter of the propellers in the bottom plenum have to be considered in the total height of the construction. The vertical wind tunnel training device disclosed in US 6,083,110A further comprises a temperature regulator.

The foregoing example of the related art and limitations related therewith are intended to be illustrative and not exclusive. Other limitations of the related art will become apparent to those of skill in the art upon a reading of the specification and a study of the drawings.

It is thus an object of the invention to provide a vertical wind tunnel freefall simulator which is optimized as to the temperature regulation of its recirculating airflow.

### SUMMARY OF THE INVENTION

Another aspect of the present invention is to provide a vertical wind tunnel having one or more return air ducts to conserve heat, reduce energy consumption, reduce noise and allow all-weather operation.

Another aspect of the present invention is to provide a vertical wind tunnel having a passive air exchange system with adjustable inlet/outlet doors that mechanically ejects heated air from the system and draw in cooler ambient air in order to most efficiently control the temperature inside the wind tunnel with minimal extra work by the fans.

Another aspect of the present invention is to provide a vertical wind tunnel in which the adjustable inlet/outlet doors are arranged such that they also form a "nozzle" or flow contraction thereby creating a favorable pressure gradient between the inside and outside of the tunnel and encouraging the air exchange in order to efficiently control the temperature inside the wind tunnel with minimal extra work by the fans and without the use of other more costly air cooling technologies.

Other aspects of this invention will appear from the following description and appended claims, reference being made to the accompanying drawings forming a part of this specification wherein like reference characters designate corresponding parts in the several views.

To reduce the risk of occupants falling out of the air column and injuring themselves, the air column extends completely from one wall of the flight chamber to the other. This "wall to wall" airflow also reduces drag at the edges of the air column and increases efficiency of the entire system. The airflow passes through a "cable floor" into the flight chamber. The cable floor provides support for the users when the airflow through the flight chamber is not sufficient to support them. The cable floor is made from reduced drag cables comprised of a collection of round strands in a particular orientation and of particular sizes. These cables can also be used in any application where a reduced drag in air would be advantageous.

At or near the upper (or downstream) end of the flight chamber, a "virtual net" comprised of one or more electronic (preferably optic) sensors, monitors the position of the occupant(s) within the flight chamber. In the disclosed embodiment, the control system will automatically lower the speed if the occupant(s) fly too high in the flight chamber.

The flight chamber can be round, oval or polygonal and can range from a bit less than 6,97 m² (75 square feet) to over 14,86 m² (160 square feet) in area. The flight chamber may accommodate up to six users at a time. The airflow velocity in the flight chamber can reach as high as 257,4 km/h (160+ mph), which will fully support as many as six users. In the preferred embodiment, one or more of the walls of the flight chamber include or comprise flat or curved windows constructed of transparent Plexiglas®, acrylic plastic, glass or similar high strength transparent material. When present, the windows into the flight chamber allow an unrestricted view of the activities taking place within the therein.

Adjacent to the flight chamber is a staging area. The flight chamber has an entry opening and exit opening to the staging area through which a user or multiple users may enter and exit the flight chamber. In certain embodiments in which rotations of occupants in and out of the flight chamber might be less frequent, these opening may he fitted with doors which slide, roll or otherwise move to close one or both of these openings. Users wait in the staging area for their turn in the flight chamber. The staging area has transparent windows so that an observer may view the flight of any person(s) within the flight chamber without entering the staging area. The staging area has a single or multiple doors that open periodically to allow people to exit the entire system. The staging area may also be fit with an optional "piggyback" or secondary staging area. This creates an airlock that allows groups to rotate in and out of the staging area from outside the system without requiring the airflow to stop.

The area above (downstream of) each doorway in upper section of the flight chamber may include perforated panel which provides an alternate airflow path when users are entering and exiting the flight chamber. In the preferred embodiment, a small flow deflector will also be located below (upstream of) the cable floor just below each opening between the flight chamber and staging area to minimize the amount of air moving between them and reduce the amount of balancing necessary.

The fans and other controls can be operated from inside the staging area, inside the flight chamber or from an attached or remote control room. The fans are controlled to achieve the optimum airflow velocity through the flight chamber.

Next above the perforated section is the primary divergent diffuser. The primary diffuser diverges at approximately 3.5 to 5 degrees from the major axis providing a "equivalent cone angle" of 7 to 10 degrees. The increasing cross-sectional area reduces the velocity of the airflow from the flight chamber to the fans. Above (or downstream of) the primary diffuser is the upper plenum which may include the first set of high efficiency turning vanes. In a single return system these turning vanes (or simply the plenum if no vanes are used)redirect the airflow from substantially vertical to substantially horizontal. In a multiple return system, these vanes (or simply the plenum if no vanes are used) split the air into to basically equal flows and turn each flow from substantially vertical to substantially horizontal.

The airflow then passes through the inlet ducts and into the fans. The fan inlet duct transitions the flow from roughly square or rectangular to roughly round. In the preferred embodiment, the fan inlet ducts act as diffusers expanding the flow area as much as possible without creating flow separation. The fans are preferably high-efficiency axial flow fans, although any fan adapted for use in a wind tunnel is acceptable. In the preferred embodiment, the fans contain a bullet-shaped nosecone and a teardrop-shaped tailcone. In the preferred embodiment, the fan casings act as diffusers and are sized such that, after taking into account the area in the center of the fan obscured by the nosecone, fan centerbody and tailcone, the net flow area through the fans increases as much as possible without creating flow separation. The velocity of the airflow through the invention is controlled by either changing the pitch of the fans or by changing the rotational speed of the fans.

The airflow passes through the fans and into the exit ducts which also transition from roughly round to roughly square or rectangular. In the preferred embodiment, the exit ducts are act as diffusers expanding the airflow as much as possible without creating flow separation. The airflow travels through a set of exit ducts to the second set of high-efficiency turning vanes (if used) which turn the air from substantially horizontal to substantially vertical.

The airflow then enters the return air ducts. In the preferred embodiment, these return air ducts are also shaped as divergent diffusers expanding the airflow as much as possible without creating flow separation. In the preferred embodiment, each return air duct has an air exchange mechanism comprised of an even number of louvers located on opposing faces of the return air duct. These are situated and sized so that they together create a nozzle or sudden contraction in the flow area at the point of the louvers. This nozzle [increases] decreases the [dynamic] static pressure at that point of the system and assists in the expulsion of heated air from the wind tunnel through the exhaust louver. This lowers the pressure in the system and assists the inlet louvers as they draw in cooler ambient air from outside of the system. This arrangement allows heated air in the system to be replaced with cooler ambient air, thereby allowing a user to adjust the temperature in the flight chamber for flyer comfort without the need for expensive alternatives such as air conditioning or evaporative cooling.

At the bottom (or downstream) end of the return air towers, the air again passes through a set of turning vanes (or simply a duct with a 90 degree turn if no vanes are used) that redirects the air from a substantially vertical to a substantially horizontal path. The air then enters the bottom plenum which may also act as a divergent diffuser expanding the air as much as possible without causing flow separation. At the end or the (or downstream) end of the bottom plenum, the air again passes through a set of turning vanes (or simply a duct with a 90 degree turn if no vanes are used) that redirects the air from a substantially horizontal to a substantially vertical path. In a multiple return system, the flows will be re-joined at this point.

The air then passes into the inlet contractor. This trumpet-shaped or bell-shaped device quickly reduces the flow area and accelerates the air to its maximum speed just ahead of the flight chamber. Here again aerodynamic laws govern how quickly one can reduce this flow area without degrading the quality of that flow.

### BRIEF DESCRIPTION OF THE DRAWINGS

FIG. 1 is a top perspective view of a single return simulator.
FIG. 2 is a cutaway view of the FIG. 1 embodiment.
FIG. 3 is a top perspective view of the flight chamber of FIG. 1.
FIG. 4 is a top plan view of an oval outlet, rectangular inlet airflow contractor.
FIG. 5 is a schematic view of an oval/polygon shaped outlet of an airflow contractor.
FIG. 6 is a schematic view of an oval outlet airflow contractor.
FIG. 7 is a schematic view of an oval viewing area.
FIG. 8 is a top perspective view of a double airlock staging area.
FIG. 9 is a schematic view of a temperature regulator.
FIG. 10 is a side, cutaway view of the temperature regulator of FIG. 9.
FIG. 11 is a top perspective view of deflectors on flight chamber entrance doors.
FIG. 12 is a close up view of a deflector.
FIG. 13 is a side cutaway view of a fan and housing.
FIG. 14 is a side cutaway view of two fans and housings mounted divergent from a centerline therebetween.
FIG. 15 is a top perspective view of a two return simulator.
FIG. 16 is a cutaway view of the FIG. 15 embodiment.
FIG. 17 is a schematic view of a V footprint two return simulator.
FIG. 18 is a schematic view of a V footprint two return simulator in a mall.
FIG. 19 is a schematic view of a multi-simulator configuration in a building.
FIG. 20 is a side perspective view of a mall type viewing area for a simulator.
FIG. 21 is a schematic view of a dual contractor (one underground and horizontal)system.
FIG. 21A is a sectional view taken along lines 21A-21A of FIG. 21.
FIG. 22 is a top perspective view of a cable floor.
FIG. 23 is a schematic view of a floor sensor/shutoff system.
FIG. 24 is a top perspective view of a rounded diffuser.
FIG. 25 is a schematic view of a cruise ship having a water-cooled simulator.
FIG. 26 is a side perspective view of an anti-drag cable, first embodiment.
FIG. 27 is a view of a second embodiment cable.
FIG. 28 is view of a third embodiment cable.
FIG. 29 is a cross sectional, schematic view of a cable with a single outer strand a different size from the other outer strands.
FIG. 30 is a cross sectional, schematic view of another embodiment of a reduced drag cable.
FIG. 31 is a cross sectional, schematic view of another embodiment of a reduced drag cable with a single larger wire.
FIG. 32 is a cross sectional, schematic view of another embodiment of a reduced drag cable with two smaller wires.
FIG. 33 is a perspective view of a cable with a large strand.
FIG. 34 is a perspective view of a cable with two smaller strands.
FIG. 35 is a graph showing the reduction in drag of some of the disclosed cables.

Before explaining the disclosed embodiment of the present invention in detail, it is to be understood that the invention is not limited in its application to the details of the particular arrangements shown, since the invention is capable of other embodiments. Also, the terminology used herein is for the purpose of description and not of limitation.

### DETAILED DESCRIPTION OF THE DRAWINGS

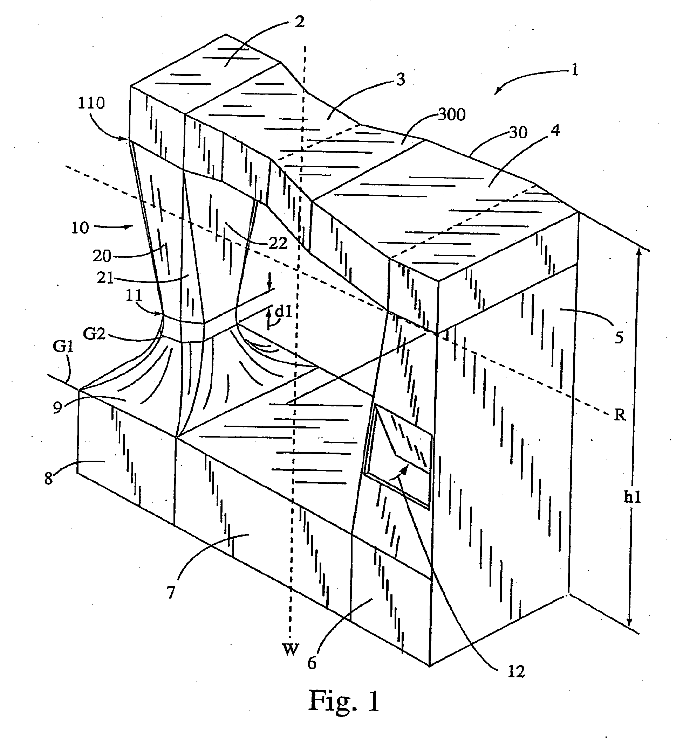

Referring first to FIG. 1 a single return simulator 1 is shown, wherein height L₁ is preferably in the range of about 15,24 m - 36,58 m (50-120 feet). Some installations may bury all components below a ground level of either G₁ or G₂. The flight chamber 10 may be made entirely or partially with transparent panels. If ground level is at G₂, then an opaque pedestal-type image formed in area d₁ which may be about 2,13 m (seven feet) high. This embodiment in a mall creates an eye-catching, live action human flight studio in the flight chamber 10. This design attracts new "fliers" who pay to experience simulated skydiving in flight chamber 10. Dotted line R represents a roof, wherein components above R can be roof-mounted to reduce noise. Dotted line W represents a wall, wherein components beyond the wall W away from the flight chamber 10 could be isolated from the flight chamber to reduce noise near the flight chamber 10.

Most prior art flight chambers provide for parallel walls in the flight chamber so that experienced fliers can practice maneuvers at a constant wind velocity perhaps at around 225,26 km/h (140 miles per hour). Simulator 1 has a "zero height" flight chamber along elevation 11. Elevation 11 is the line which joins the airflow contractor 9 to the airflow diffuser 10, wherein the diffuser 10 has diverging walls 20, 21, 22, etc., and the diffuser 10 also serves as the flight chamber 10.

Nominally the air speed at line 11 is at about 225,26 km/h (140 mph), the maximum speed in the simulator. As the flier goes higher in the flight chamber 10 to the top of the flight chamber 10 to junction 110, the air speed drops, perhaps to about 193,08 km/h (120 mph). Fliers can change their drag profiles from a maximum spread eagle position to a minimum human ball position. Thus, if a flier ascends to the top of the flight chamber 10 and then changes his drag to a human ball shape, he will fall downward. The diffuser shape of the flight chamber 10 will provide a self-braking system due to the increasing airspeed with each incremental descent down into the flight chamber 10. A safety net is provided a line 11.

The diverter 2 meets the diffuser 10 at junction 110. The air is diverted from a vertical path to a horizontal path in the diverter 2. All the diverters 2, 4, 6, 8 change the air direction by about 90 degrees.

The fan assembly 3 accelerates the air, perhaps with two side-by-side fans. The basic dynamics in a return air simulator involve compromises in energy efficiency, noise and size. In the simplest design, one would attempt to keep the airflow close to full speed for the entire loop through the simulator. However, the height would have to rise, the noise would be enormous, and the heat from friction in the plenums would be enormous. Therefore, for more efficient operation, it is necessary to slow the air down during its travel through the simulator loop by enlarging the cross-sectional areas of the plenum to attain commercially acceptable levels of height h₁ as well as noise, and simultaneously attempt to use the least horsepower possible for the fans.

The diverters 2, 4, 6, 8 generally do not have diverging walls due to cost construction considerations. The fan housing segment 300 and the fan section 3 have diverging walls. The top plenum 30 has diverging walls. The vertical return plenum 5 has diverging walls. The bottom plenum 7 does not have diverging walls due to tradeoffs in cost construction considerations. Bottom plenum 7 could have diverging walls.

The airflow contractor 9 has converging walls functioning to narrow the cross-sectional plenum area, thereby accelerating the air to about 225,26 km/h (140 mph) for flight simulation. The air inlet 12 brings in ambient air to cool the simulator air.

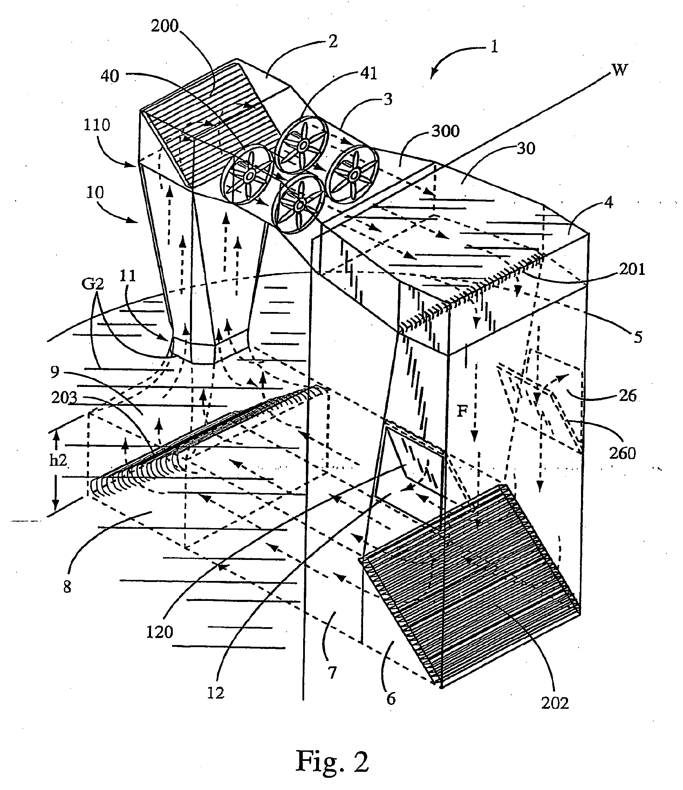

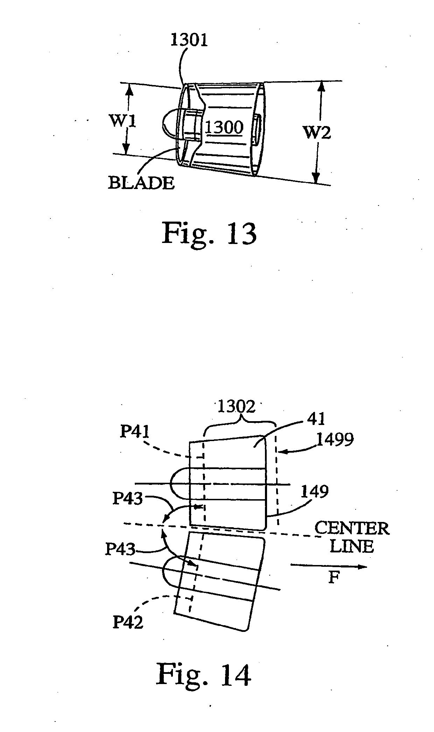

Referring next to FIG. 2 a schematic representation of the internal workings of the simulator 1 is shown. Airflow is shown by the arrows F. Diverting vanes 200, 201, 202, 203 each change the airflow direction by 90 degrees. Two fans 40, 41 are schematically shown mounted horizontally side by side in their housing 3 (refer to FIG. 13 for a perspective view) wherein right after the fans a plenum diffuser 300 expands and slows the airflow. The diffusing continues in top plenum 30, and then in vertical return plenum 5, and finally through the flight chamber 10.

A passive temperature regulation system is provided by having air inlet 12 louver 120 face downstream. Additionally the air outlet 26 has a louver 260 that faces upstream. By mounting the inlet 12 about opposite outlet 26, a reducing nozzle is formed by louvers 120, 260, thereby creating a decreased static pressure zone V downstream from the inlet 12. Therefore, ambient air is [forced passively] drawn into the simulator 1 without the use of an additional fan.

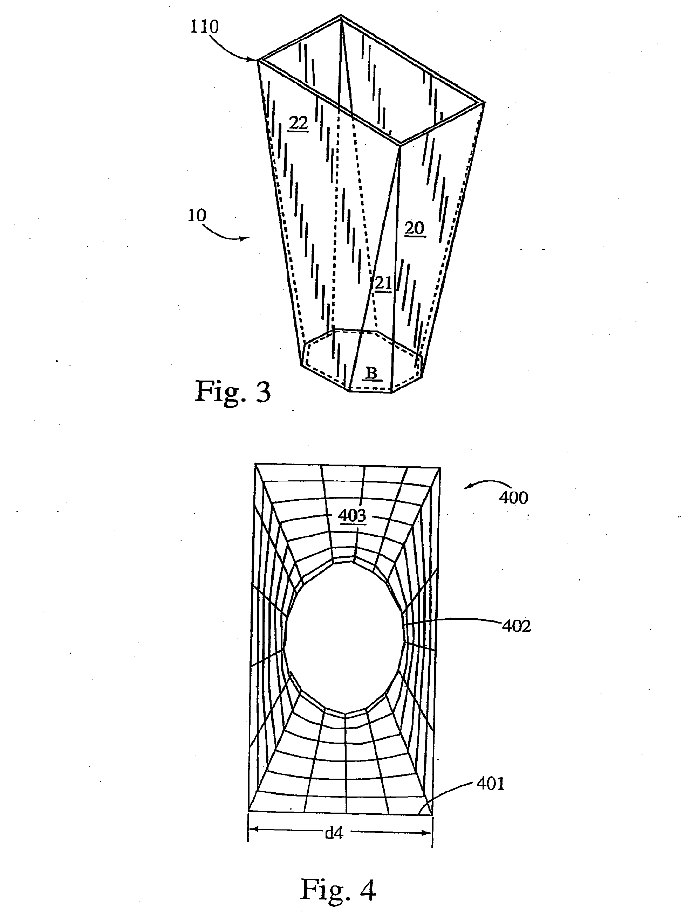

Referring next to FIG. 3 the diffuser/flight chamber 10 is in the shape of a polygon (octagon) as seen by the base B. Base B is covered by a safety net. The walls 20, 21, 22 etc. diverge at an optimal aerodynamic angle in the range of about 7-12 degrees from each other. The top of the flight chamber 10 is seen as a rectangle at arrow 110. All or some of the walls 20, 21, 22 etc. may be transparent.

Referring next to FIG. 4 an airflow contractor 400 has the preferred design of a rectangular inlet 401 and an oval outlet 402. Transition walls 403 contract the airflow from the inlet 401 to the outlet 402. Preferably the height h₂, FIG. 2, which is sometimes buried underground, equals length d₄. This combination of shape and dimensions form a cost-effective balance for a relatively low height, and commercially viable simulator 1.

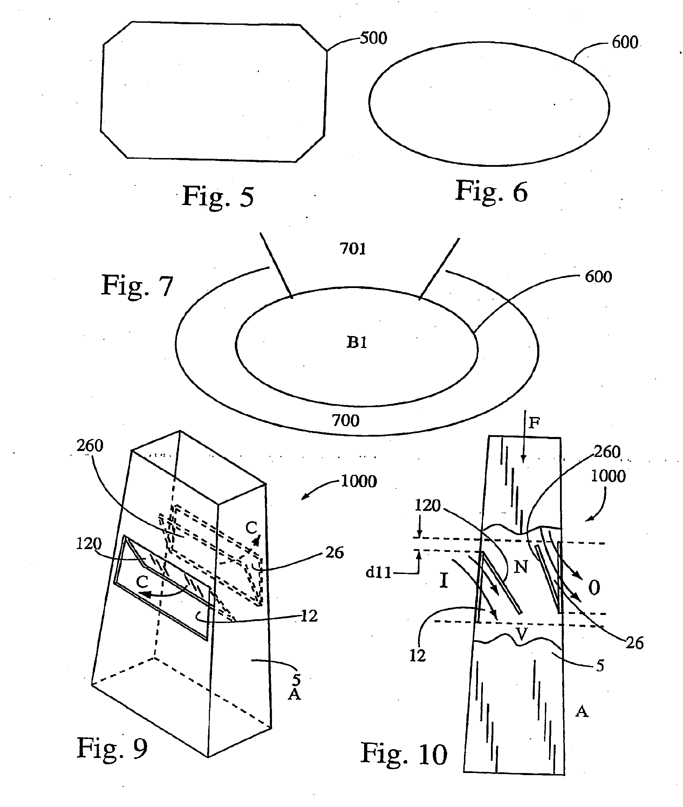

Referring next to FIGS. 5, 6, 7 the term "oval outlet" airflow contractor covers any oval-like shape such as polygon oval outlet 500 and perfectly oval outlet 600. The oval-like shape provides for a larger viewing area 700 compared to a round outlet having the same cross-sectional area. Area 701 includes a staging and entry area. The flight chamber bottom B1 could be in a mall with expensive retail space, wherein the larger viewing area 700 has considerable commercial value.

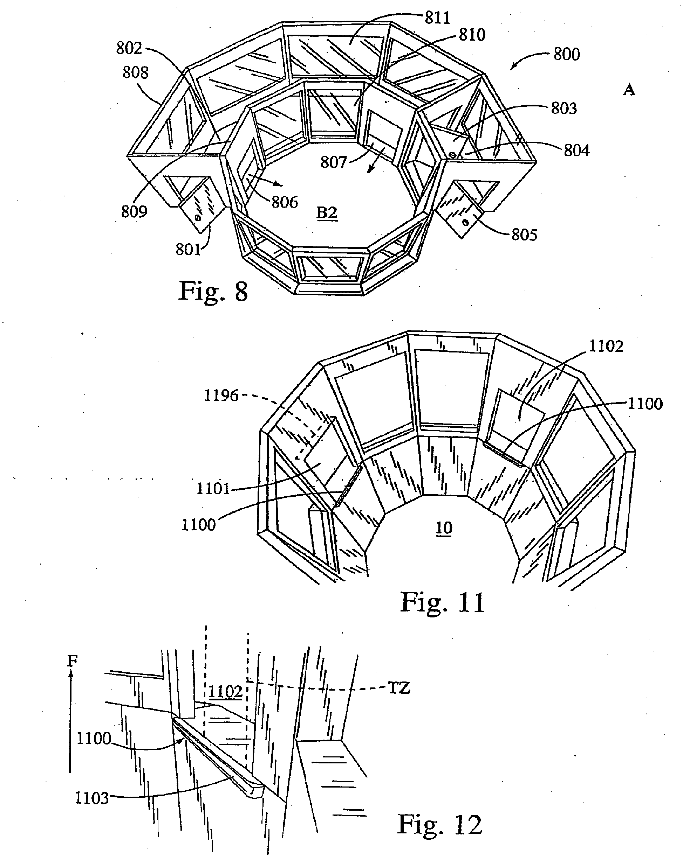

Referring next to FIG. 8 a two-stage staging chamber 800 consists of a flight chamber bottom B2 with a flight chamber wall 809 having windows 810 and flier entrances 806, 807. Entrances 806, 807 can be doorless or with hinged doors or with sliding doors. So long as doors 801, 805 are closed the fans do not have to be shut down to allow fliers to enter/leave the flight chamber 10. Ambient pressure is shown as A. Doors 801, 805 open from ambient A to first staging room 802 and second staging room 804. Door 803 separates the staging rooms 802, 804. In operation a group of fliers could enter room 804 while door 803 is closed, then door 805 is closed. Then the fliers would enter room 802 with doors 801, 805 closed. Flier entrances 806, 807 are used.

Referring next to FIGS. 9, 10 the temperature regulating system 1000 consists of a plenum 5 having an airflow F. The outlet 26 is located opposite the inlet 12, but slightly upstream at a distance d11 chosen by design parameters. Preferably louvers 120, 260 are controllable from a control room to vary the air exchange from ambient A to the plenum 5. Inlet air volume I must approximate outlet air volume O. The decrease in internal static pressure V is formed by contracting and accelerating the air at nozzle N.

The air exchange system used for closed-circuit wind tunnels disclosed herein consists of two large louvers in each return leg of the tunnels: an exhaust louver and an intake louver. The exhaust and intake louvers are located and oriented so that there is favorable interaction between them. This location is part of what is novel about this system.

The leading edge of the exhaust louver deflects into the tunnel and scoops out the air from inside the tunnel. The intake louver is located on the opposite tunnel wall from the exhaust louver. Its hinge line is designed to line up with the leading edge of the exhaust louver at the design setting. The trailing edge of the intake louver is deflected into the tunnel. It is deflected to a greater extent than the exhaust louver to cause the internal airflow velocity to increase by creating nozzle N. This is the key. That increase in velocity causes a decrease in the internal static pressure (Bernoulli's law). The lower internal static pressure (below atmospheric) actually sucks air into the inlet. As a minimum, the intake louver has the same chord or length as the exhaust louver. In some wind tunnel configurations it is desirable that the intake louver have a greater length or chord than the exhaust louver to reduce the deflection required.

Traditional wind tunnel air exchangers either have the exhaust and intake in separate sections of the wind tunnel, or if they are in the same part of the wind tunnel there is not favorable interaction between the two louvers to cause this desired drop in the internal static pressure. Other designs have employed a screen or some other drag-producing device downstream of the exhaust and upstream of the intake to achieve a drop in internal static pressure in order to cause the outside air to enter the tunnel. While this works, it is very inefficient. This results in unnecessary loss in total pressure and the attendant loss in tunnel performance. Often there is additional ducting required to control the internal static pressure which increases the construction cost. The present invention avoids these problems and achieves the desired air exchange with the lowest power loss.

Referring next to FIGS. 11, 12 a deflector 1100 is placed along the bottom edge of a flier entrance 1101, 1102 in order to reduce airflow from the flight chamber into the room 802 and thereby minimize cavity resonance in room 802. The deflector 1100 has an angled leading edge 1103. The leading edge 1103 inclines into the flight chamber 10 in a downstream direction. The flight chamber 10 could be round instead of a polygon as shown. Optionally a deflector 1196 could be mounted at the top of the door, wherein it bends inward into the staging area from the flight chamber.

Referring next to FIGS. 13, 14 the fans 40, 41 of FIG. 2 are shown in their preferred design. They are oriented slightly away from each other relative to a centerline as shown. The fan planes P41, P42 are canted downstream forming acute angle P43. The fan cowling (fan can) 1300 has diverging walls 1302 after the segment next to the blade 1301. Nominally W1 may be 2.62 meters (103 inches), and W2 may be 3.10 meters (122 inches). A staggering of the fans can help place the two fan cans 1300 closer together such as by moving the front 149 of fan 41 to dotted line 1499. This reduces the distance between the two columns of air from the fans which reduces the length of the return plenum and the height. Blade 1301 could be forward.

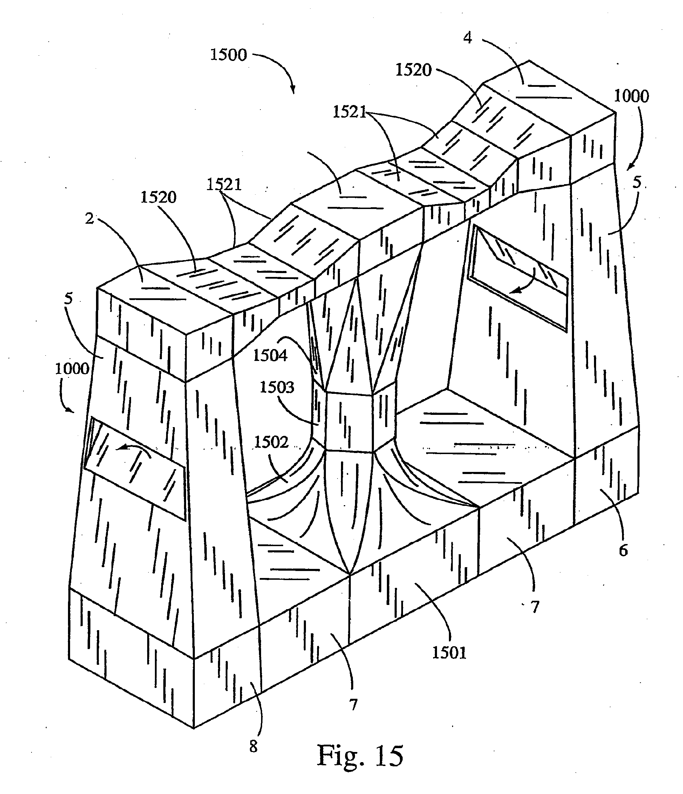

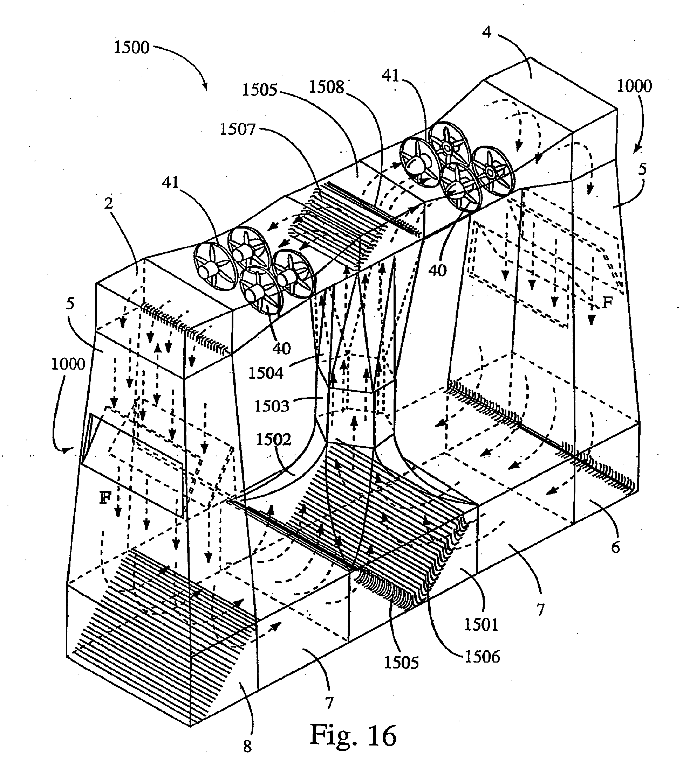

Referring next to FIGS. 15, 16 a dual return simulator 1500 is shown. Functional equivalent components to the single return simulator 1 are given like numbers, wherein no further description is needed.

In this particular embodiment, the flight chamber 1503 has parallel walls rather than diverging walls in order to provide a relatively constant airflow therein. Above the flight chamber 1503 is a diffuser 1504 which connects to a double diverter 1505. Double diverter 1505 has two diverting vanes 1507, 1508. Fan ductwork 1521 supports the fans 40, 41. Top diffusers 1520 connect to the diverters 2, 4 as shown. A left and a right vertical return plenum 5 each has a temperature regulator system 1000.

The bottom plenums 7 each connect to a double diverter 1501. Double diverter 1501 has two diverting vanes 1505, 1506. An airflow contractor 1502 accelerates the airflow into the flight chamber 1503. A larger flight chamber 1503 can be supported with the four fans shown as compared to the two-fan embodiment of FIG. 2.

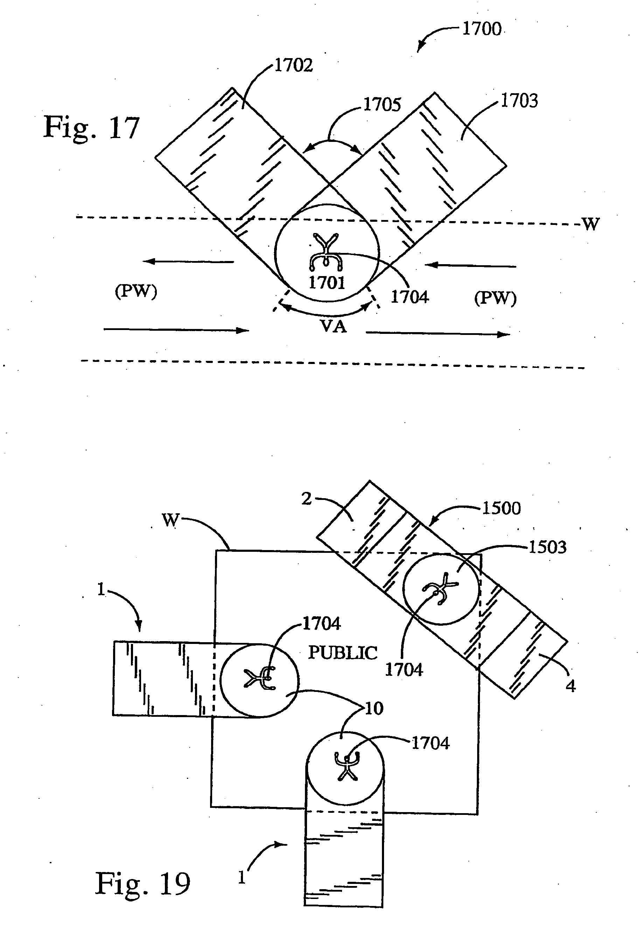

Referring next to FIG. 17 a dual return simulator 1700 has a flight chamber 1701 with flier 1704 therein. The air return components 1702, 1703 are shown with this top plan view to form a V configuration (angle 1705 is an acute angle) extending from the flight chamber 1701. One use for this simulator 1700 is in a public pedestrian walkway PW as shown, a viewing area VA juts into the pedestrian walkway PW, while the components 1702, 1703 are soundproofed and hidden by wall W. As noted above, the fans and related ductwork may be mounted on the roof.

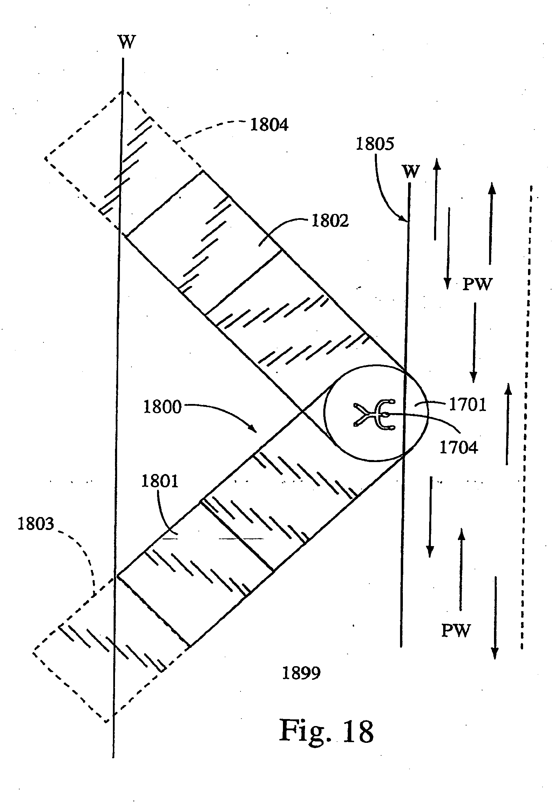

Referring next to FIG. 18 another V shaped simulator 1800 is set in a different mall environment. The pedestrian walkway PW has expensive retail store space along area 1805. Less expensive mall space 1899 may have storage areas and could house return air components 1801, 1802. An outside wall WOUT locates the return air components 1803, 1804 outside as shown.

Referring next to FIG. 19 a wall W creates an enclosed area designated as PUBLIC. Possible configurations of simulators 1 and 1500 are shown. Flying humans 1704 could create an exciting indoor amusement area designated as PUBLIC.

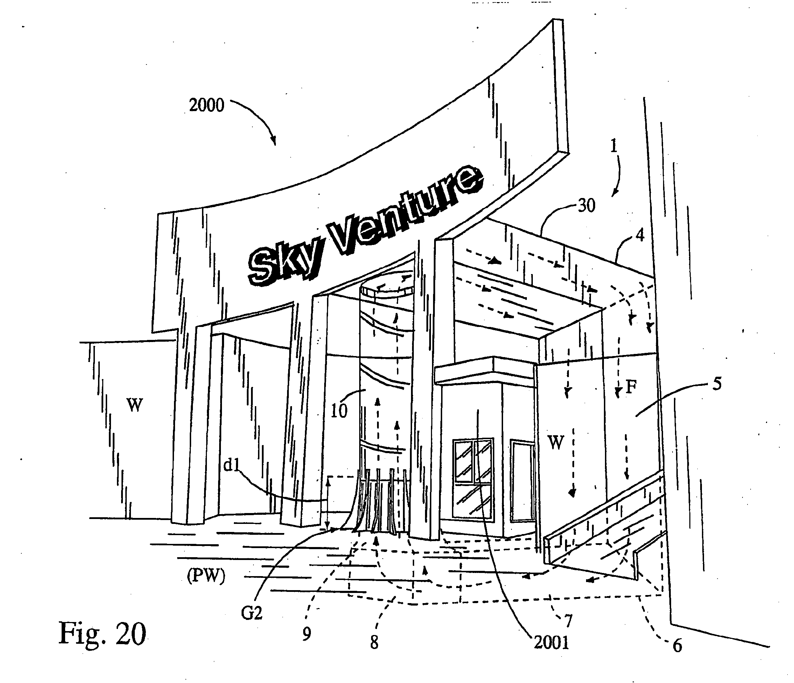

Referring next to FIG. 20 an artist's rendering of the simulator 1 of FIG. 1 is shown, wherein a mall 2000 has a pedestrian walkway PW. The term "mall" herein includes a high-people density entertainment venue including amusement parks, theatre complexes, family entertainment centers, and college campuses. Ground level G₂ forms pedestal area d₁ so that the public looks up into the transparent flight chamber 10. A ticketing area 2001 could blend in with other retail store fronts. Walls W and the ground G₂ screen components 5, 6, 7, 8 are shown in dots.

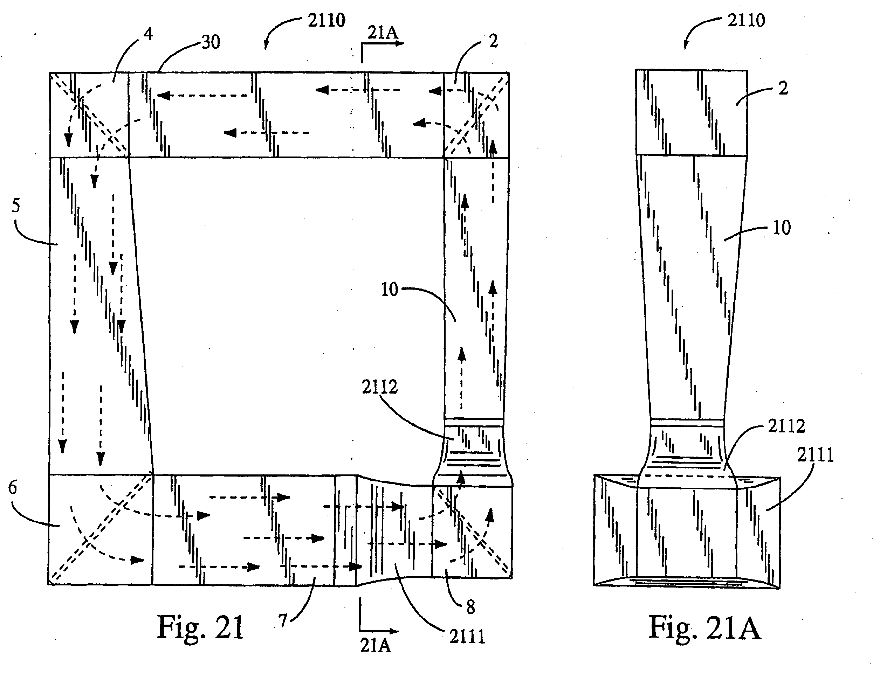

Referring next to FIGS. 21 and 21A, a two-stage airflow contractor is shown. A first stage contractor 2111 is horizontal and feeds diverter 8. The second stage contractor 2112 is vertical and feeds the flight chamber 10. The simulator 2110 could bury the first stage contractor 2111 underground. The result is less noise and less height for the second stage contractor 2112. This invention can provide a lower overall height for the simulator 2110.

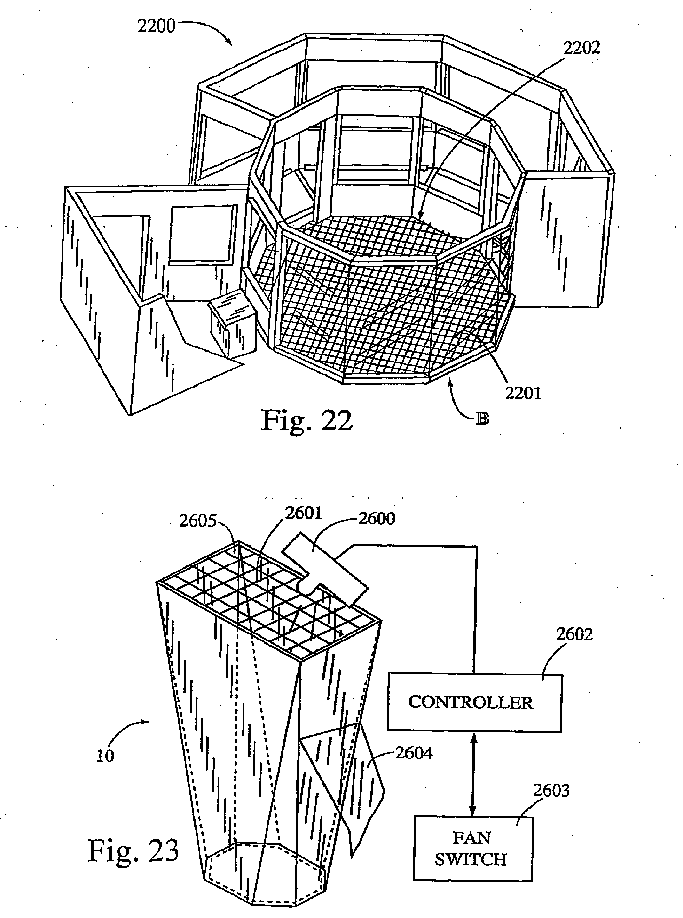

Referring next to FIG. 22 a staging area 2200 has a flight chamber 2202 with a bottom B consisting of a mesh net 2201.

One embodiment of the mesh net forming the floor of the flight chamber is a 3/32-17-strand stainless steel aircraft cable woven into a 60 cm x 60 cm (2'x2') grid. One or both ends of the cable are run through a compression spring, depending on the conditions of the particular application. One hundred-twenty two (122) cables make up the tunnel floor depicted. The number of cables will depend on the shape and size of the flight chamber 2202, the maximum number of fliers planned for the flight chamber and other design considerations.

The compression of the springs is adjusted to give the proper "bounce" to the floor providing increased safety should a flyer become unstable and fall to the cable floor.

### Tunnel Viewing Walls

There are 11 large 31 mm (1-1/4") acrylic panels which allow the controller, flyers and spectators in the staging/viewing area to see the activity in the flight chamber and flight deck in the depicted embodiment. The number of panels would depend on the installation. There is a large acrylic panel that allows spectators to see inside the control room.

Referring next to FIG. 23 a flight chamber 10 has a flier sensor 2600 that uses energy waves 2601 (light, radio, sound, UV, etc.) to detect a flier moving too high into the flight chamber 10. A controller 2602 may consist of simple on/off output logic, or current modulator or the like to temporarily reduce the airflow to drop the flier lower into the flight chamber. An emergency ambient door 2604 could also be opened by the controller 2602. A mesh net 2605 may also be used to prevent fliers from traveling too high.

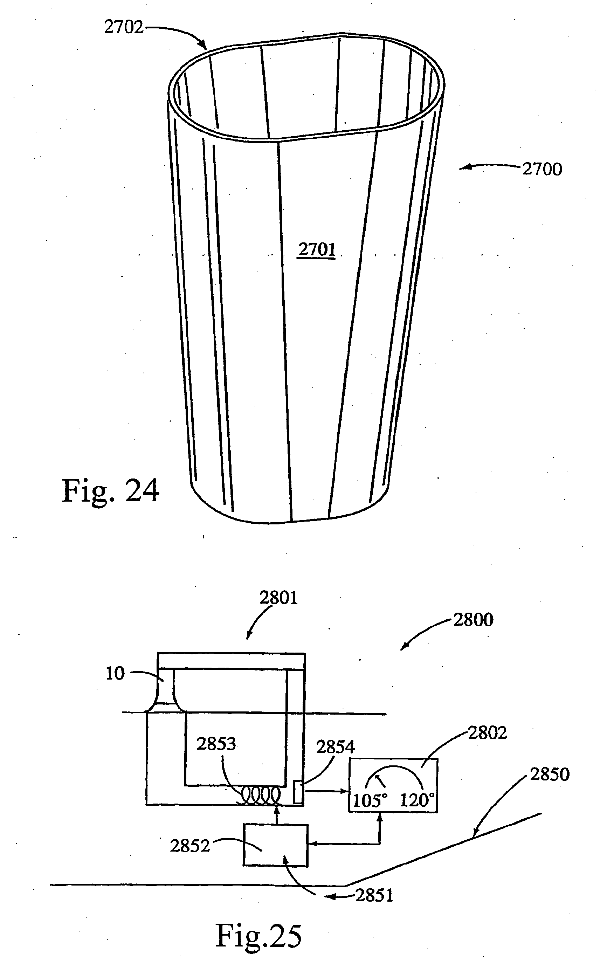

Referring next to FIG. 24 another diffuser 2700 might also serve as a flight chamber. The walls 2701 could be 7,62 cm (three-inch) acrylic panels. The oval outlet 2702 has curved edges.

Referring next to FIG. 25 a ship 2850 has a simulator 2801 with a seawater cooling system 2800. A seawater inlet 2851 feeds a heat exchanger 2853 in the simulator via a flow controller 2852. An air temperature sensor 2854 communicates to a temperature controller 2802 to keep the air temperature at a set point by controlling the flow controller 2852.

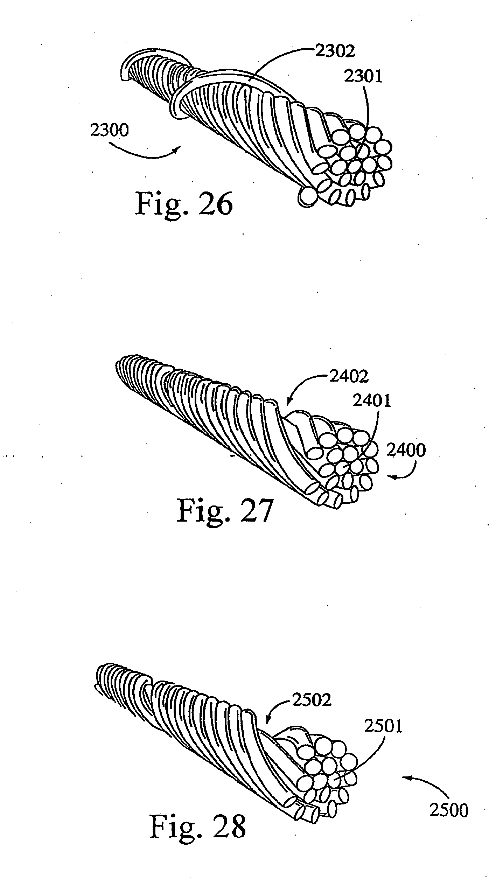

FIGS. 26, 27, 28 offer individual cable designs which could form mesh net. Basic aerodynamics teaches that a wing-type profile reduces drag as opposed to a blunt or flat profile. Cable 2300 has a standard twisted element core 2301 with an external helical wrap 2302 shown in Fig. 26.

Cable 2400 has a modified twisted element core 2401 with a single helical element 2402 missing as shown in FIG. 27.

Cable 2500 has a modified twisted core 2501 with double helical elements 2502 missing as shown in FIG. 28.

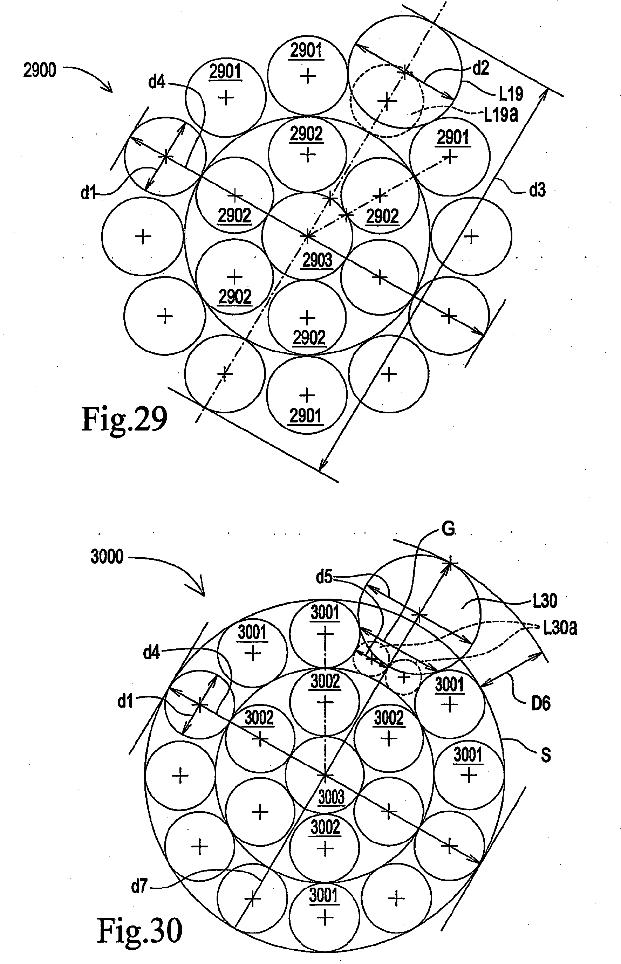

Referring next to FIG. 29 the depicted embodiment of cable 2900 has eighteen strands. Strands 2901 form an outer cable perimeter and have approximately equal diameters d₁. D₁ is about 0.4826 mm (0.019 inch) in the depicted embodiment. Strand L19 completes the outer cable perimeter and has a diameter of d₂, which is different from d₁. In the depicted embodiment of FIG. 29, strand L19, shown in the solid line, has a larger diameter of about 0.7112 mm (0.028 inch). The strand L19a, shown in dotted lines, has a smaller diameter than strands 2901.

D₂ should be at least 10% different from d₁, more commonly D₂ will be 25% or more different from d₁. In those embodiments where d₂ is larger than d₁, d₂ can be as much as 250% the size of d₁. Other amounts of size variation would work in a similar fashion. When d₂ is smaller, the minimum size of d₂ will be determined by structural considerations. Strand L19a must be of sufficient size to not break in use and to hold the two adjacent strands 2901 apart at least minimally. The number of strands will depend on the application the cable will be used in. In principle, cables with 6 or more strands could be made according to the present disclosure and function accordingly.

The inner strands 2902, 2903 can have different diameter from strands 2901 and form the core of the cable 2900. Center strand 2903 can have a different diameter from strands 2902. It is irrelevant what the diameter of inner strands 2902 and 2903 is in relation to the diameter d₂ L19.

In the depicted embodiment of 2900 with L19 the ratio of D₂/D₁ is about 1.47, wherein the diameter d₃ is about 10% larger than a uniform strand diameter d₄. The cable 2900 is a twisted strand type with strand L19 forming a helical ridge shown in FIG. 9.

Referring next to FIG. 30 cable 3000 has a larger outer perimeter strand solid line L30 with a diameter of d₅. In the depicted embodiment d₅ is 0.8636mm (0.034"). D₁ is the same as in FIG. 5. The ratio D₅/D₁ is about 1.79. Length d₆ is about 0.5055 mm (0.0199 inch) above the perimeter surface extent S in the depicted embodiment.

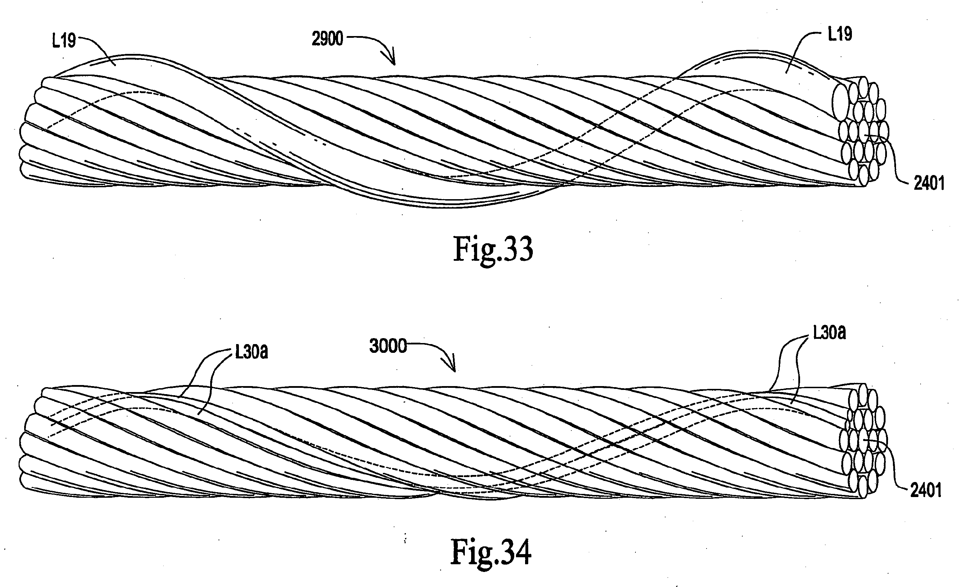

Also shown in FIG. 30, strands L30a are shown in dotted lines with a diameter d5 of less than 50% of D1. In this embodiment, two or more strands L30a will be used to hold open gap G. Cable 300 with two strands L30a is shown in a perspective view with gap G forming a helical groove in FIG. 34.

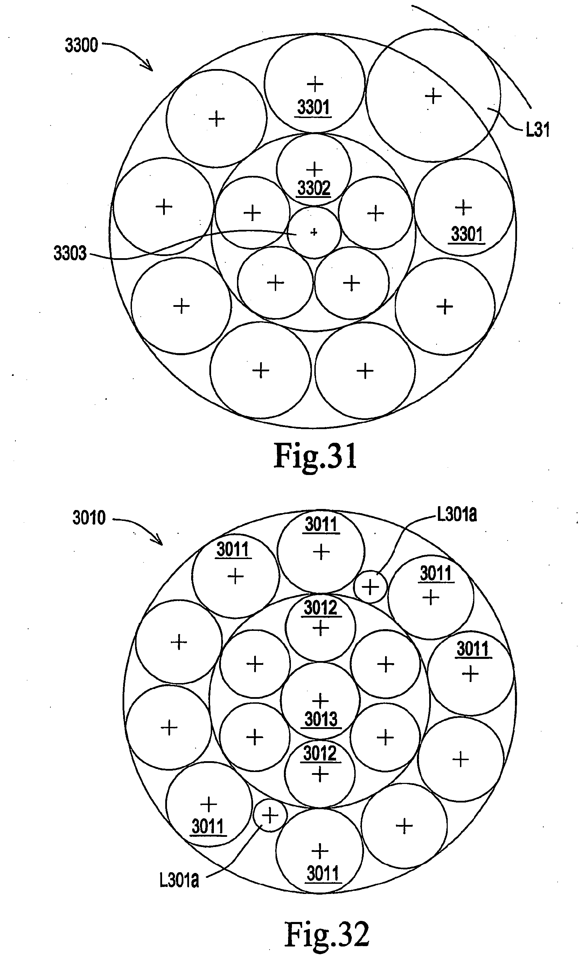

In FIG. 32, another embodiment of the cable 3010 is shown. The outer strands 3011, the inner strands 3012 and 3013 form the main structure of the cable 3010. Strands L301a have a diameter of less than 50% of the diameter of 3011. Instead of both strands L301a being in a single gap G, as in FIG. 6, strands L301a are placed on either side of strand 3010, forming two helical grooves.

Referring next to FIG. 339 the helical ridge of L19 is seen in perspective.

In operation of the wind tunnel, air over 32,2 km/h (20 MPH) passes at about a 90° angle to the cable which forms a cable floor / safety net shown in FIGS. 22 (2202). In all of the disclosed wires the direction the air flow comes from is not critical for the functioning of the device. Other than airflow going directly down the length of the cable, all other directions of air flow over the cable are believed to result in at least some reduction of drag.

FIG. 31 shows a cable 3300 with 15 strands. Strands 3301 form the outer premier with L31. Strands 3302 and 3303 form the inner core of cable 3300. L31 could be smaller in diameter than strand L31 (not shown).

The cables disclosed can be used in any wind tunnel or other environment where it is desirable to employ a cable that suffers less than the normal drag when it passes through the air or when air passes over the cable, not just in re-circulating wind tunnels.

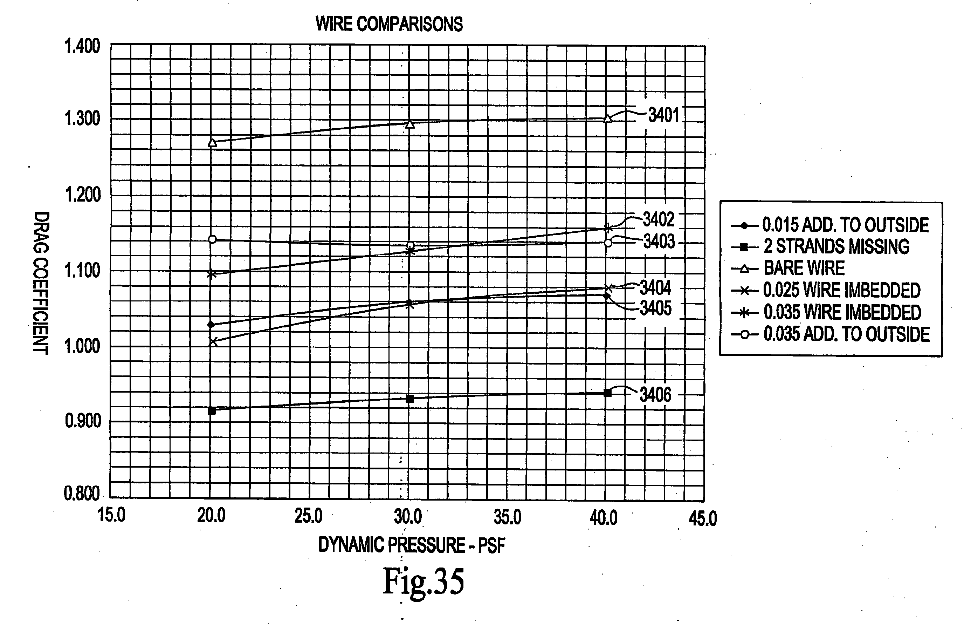

FIG. 35 is a graph showing the drag coefficient of different cables as a function of the dynamic pressure. In all of the test cables, all most of the strands in the cable were approximately 0,048 cm (0.019 inch) in diameter. Line 3401 shows a standard twisted wire cable. Lines 3403 and 3405 show cables 2300 with helical strand 2302 wrapped around the perimeter. Line 3402 shows a strand as in FIG. 30 with a d₅ of 0,089 cm (0.035 inches). Line 3404 shows a strand as in FIG. 29 with a d₂ of 0,064 cm (0.025 inches).

The disclosed cables generally do not cost any appreciable amount more to manufacture than a standard cable of the same size. Therefore, any reduction in drag and noise and any corresponding savings in energy consumption that results from the use of this low drag cable will result in a direct cost savings.

## Claims

1. A vertical wind tunnel skydiving simulator (1) comprising:
a recirculating airflow plenum;
a vertical wind tunnel flight chamber (10);
a fan assembly (3) to provide an airflow for human flight in the vertical flight chamber;
**characterised in that**
a portion of said airflow plenum further comprising divergent walls to expand and slow the airflow;
said airflow plenum further comprising a temperature regulator;
said temperature regulator further comprising an inlet louver (120) mounted about opposite an outlet louver (260) in a common segment of the plenum, said outlet louver having a door facing inward and upstream in the common segment of the plenum, said inlet louver facing inward and downstream in the common segment; and
wherein the doors form an internal narrowing of the common segment of the plenum, thereby forming a decreased static pressure zone which draws air into the inlet louver.

2. The simulator of claim 1, wherein the fan assembly (3) comprises two side-by-side fans (40, 41).

3. The simulator of claim 2, wherein the fans (40, 41) are orientated slightly away from each other relative to a centreline between them and wherein the fan planes (P41, P42) of the fans (40, 41) are canted downstream forming an acute angle (P43) with the centreline.

4. The simulator according to one of the claims 1 or 2, wherein each fan (40, 41) of a fan assembly (3) is arranged in a fan casing (1300) acting as a diffuser.

5. The simulator according to one of the claims 3 or 4, wherein the fans are arranged in a staggered manner to reduce distance between the columns of air from the fans.

6. The simulator of one of the claims 1 to 5, **characterised in that** the flight chamber (10, 1503, 1701, 2202) is located on the inlet side of the fan assembly (3).

7. The simulator according to claim 6, wherein the fan assembly (3) is mounted horizontally in a top member (30) of the generally rectangular configuration of the airflow plenum.

8. The simulator according to one of the preceding claims, **characterised in that** a top member return duct (30), a first vertical side member, and a second vertical side member return duct (5) of the airflow plenum each have a divergent wall segment to expand a flow of re-circulating air while maintaining a generally laminar airflow.

9. The simulator of one of claims 1 to 8, wherein a bottom member (7) of the airflow plenum has diverging walls.

10. The simulator according to one of the preceding claims, **characterised in that** each of the at least one fan assembly (3) is connected with its outlet side to a plurality of expanding return air ducts (3, 5, 7) followed by an inlet contractor (9) located just ahead of the flight chamber (10, 1503, 1701, 2202).

## Patentansprüche

1. Ein Vertikalwindkanalfreifallsimulator (1) umfassend:
eine rezirkulierende Luftstromkammer;
eine vertikale Windkanalflugkammer (10);
eine Ventilatorgruppe (3) zum Bereitstellen eines Luftstroms für einen menschlichen Flug in der vertikalen Flugkammer,
**gekennzeichnet durch**
einen Abschnitt der Luftstromkammer mit divergierenden Wänden zum Expandieren und Verlangsamen des Luftstroms;
wobei die Luftstromkammer des weiteren einen Temperaturregulator aufweist,
welcher Temperaturregulator ferner eine Einlassöffnung (120) aufweist, die in einem gemeinsamen Segment der Kammer einer Auslassöffnung (260) gegenüberliegend angeordnet ist,
wobei die Auslassöffnung eine nach innen gerichtete Tür hat und in dem gemeinsamen Segment der Kammer stromaufwärts angeordnet ist und die Einlassöffnung nach innen gerichtet und stromabwärts in dem gemeinsamen Segment angeordnet ist, und
wobei die Türen eine interne Verengung in dem gemeinsamen Segment der Kammer bilden, wodurch eine Zone mit herabgesetztem statischem Druck gebildet ist, **durch** die Luft in die Einlassöffnung eingesaugt wird.

2. Der Simulator nach Anspruch 1 bei dem die Ventilatorgruppe (3) zwei Ventilatoren (40, 41) in einer Nebeneinanderanordnung zueinander aufweist.

3. Der Simulator nach Anspruch 2, bei dem die Ventilatoren (40, 41) geringfügig voneinander wegweisend in Bezug auf eine Mittellinie zwischen diesen orientiert sind und wobei die Ventilatorebenen (P41, P42) geneigt sind und einen spitzen Winkel (P43) mit der Mittellinie einschließen.

4. Der Simulator nach einem der Ansprüche 1 oder 2, bei dem jeder Ventilator (40, 41) der Ventilatorzusammenstellung 3 in einem als Diffusor ausgebildeten Ventilatorgehäuse (1300) angeordnet ist.

5. Der Simulator nach einem der Ansprüche 3 oder 4, bei dem die Ventilatoren versetzt angeordnet sind, um den Abstand zwischen den Luftsäulen der Ventilatoren zu reduzieren.

6. Der Simulator nach einem der Ansprüche 1 bis 5, **dadurch gekennzeichnet, dass** die Flugkammer (10, 1503, 1701, 2202) einlassseitig bezüglich der Ventilatorgruppe (3) angeordnet ist.

7. Der Simulator nach Anspruch 6, bei dem die Ventilatorgruppe (3) horizontal in einem oberen Teil (30) der im Wesentlichen rechteckigen Konfiguration der Luftstromkammer angeordnet ist.

8. Der Simulator nach einem der vorstehende Ansprüche, **dadurch gekennzeichnet, dass** ein oberer Rückstromkanal (30) ein erstes vertikales Seitenteil und ein zweites vertikales Seitenteil (5) der Luftstromkammer jeweils ein divergierendes Wandsegment aufweisen, um einen Strom rezirkulierender Luft unter Beibehaltung einer im Wesentlichen laminaren Strömung auszudehnen.

9. Der Simulator nach einem der Ansprüche 1 bis 8, bei dem ein Bodenteil (7) der Luftstromkammer divergierende Wände aufweist.

10. Der Simulator nach einem der vorstehenden Ansprüche, **dadurch gekennzeichnet, dass** zumindest eine Ventilatorgruppe (3) mit ihrer Auslassseite an eine Vielzahl von expandierenden Rückstromkanälen (3, 5, 7), gefolgt von einem Einlasskontraktor (9), angeordnet unmittelbar vor der Flugkammer (10, 1503, 1701, 2202), angeschlossen ist.

## Revendications

1. Simulateur de parachutisme sportif à soufflerie verticale (1) comprenant :
un plenum de flux d'air de recirculation ;
une chambre de vol à soufflerie verticale (10) ;
un ensemble de ventilateurs (3) destiné à produire un flux d'air permettant à un individu de voler dans la chambre de vol verticale ;
**caractérisé en ce que**
une partie dudit plenum de flux d'air comprend en outre des parois divergentes de façon à élargir et ralentir le flux d'air ;
ledit plenum de flux d'air comprend en outre un régulateur de température ;
ledit régulateur de température comprend en outre une trappe d'admission (120) montée approximativement en face d'une trappe de sortie (260) dans un segment commun du plenum, ladite trappe de sortie comportant une porte orientée vers l'intérieur et en amont dans le segment commun du plenum, ladite trappe d'admission étant orientée vers l'intérieur et en aval dans le segment commun ; et
dans lequel les portes définissent un rétrécissement interne du segment commun du plenum, ce qui forme une zone de pression statique réduite qui produit une aspiration d'air dans la trappe d'admission.

2. Simulateur selon la revendication 1, dans lequel l'ensemble de ventilateurs (3) comprend deux ventilateurs montés côte à côte (40, 41).

3. Simulateur selon la revendication 2, dans lequel les ventilateurs (40, 41) sont orientés légèrement à distance l'un de l'autre par rapport à une ligne centrale passant entre eux, et les plans de ventilation (P41, P42) des ventilateurs (40, 41) sont inclinés vers l'aval en définissant un angle aigu (P43) avec la ligne centrale.

4. Simulateur selon l'une quelconque des revendications 1 ou 2, dans lequel chaque ventilateur (40, 41) d'un ensemble de ventilateurs (3) est disposé dans un carter de ventilateurs (1300) faisant office de diffuseur.

5. Simulateur selon l'une quelconque des revendications 3 ou 4, dans lequel les ventilateurs sont agencés en quinconce de façon à réduire la distance entre les colonnes d'air produites par les ventilateurs.

6. Simulateur selon l'une quelconque des revendications 1 à 5, **caractérisé en ce que** la chambre de vol (10, 1503, 1701, 2202) se trouve du côté admission de l'ensemble de ventilateurs (3).

7. Simulateur selon la revendication 6, dans lequel l'ensemble de ventilateurs (3) est monté horizontalement dans un élément supérieur (30) de la configuration globalement rectangulaire du plenum de flux d'air.

8. Simulateur selon l'une quelconque des précédentes revendications, **caractérisé en ce qu'**un conduit de retour d'élément supérieur (30), un premier élément latéral vertical et un second conduit de retour d'élément latéral vertical (5) du plenum de flux d'air comprennent chacun un segment de paroi divergent de façon à élargir un flux d'air de recirculation tout en maintenant un flux d'air globalement laminaire.

9. Simulateur selon l'une quelconque des revendications 1 à 8, dans lequel un élément inférieur (7) du plenum de flux d'air comporte des parois divergentes.

10. Simulateur selon l'une quelconque des précédentes revendications, **caractérisé en ce que** chacun desdits au moins un ensemble de ventilateurs (3) est raccordé par son côté de sortie à une pluralité de conduits d'air de retour évasés (3, 5, 7) suivis d'un rétrécissement d'admission (9) situé juste avant la chambre de vol (10, 1503, 1701, 2202).
